# EUROPEAN PATENT APPLICATION

(11) **EP 4 203 113 A2**
(43) Date of publication of application: **28.06.2023**
(21) Application number: 22208930.2
(22) Date of filing: 22.11.2022
(51) Int. Cl.: H01M 4/66, H01M 10/0525, H01M 50/105, H01M 50/531, H01M 50/534

(54) **LOW PROFILE BATTERY CELL**

(30) Priority: 24.12.2021 US 202117561802
(71) Applicant: INTEL Corporation, Santa Clara, CA 95054 (US)
(72) Inventor: MATSUMURA, Naoki, San Jose, CA 95118 (US); RAO, Raghavendra, KA 560072 Bangalore (IN); LEE, Ming-Chia, TW 221006 New Taipei City (TW); SINGH, Jagadish, 560037 Bangalore (IN); KOKI, Tarakesava Reddy, 500085 Hyderabad (IN)
(74) Representative: HGF

(57) **Abstract**

Embodiments of the present disclosure are directed to low-profile battery cells. For example, in some embodiments may include multiple cell tabs coupled to cathode and anode layers that are wound, such that the tabs are offset when jelly rolled. Other embodiments may be described and claimed.

## Description

### FIELD

Embodiments of the present invention relate generally to the technical field of low-profile battery cells.

### BACKGROUND

Batteries are used in a wide variety of electronic devices, including mobile computing devices. Such batteries may include lithium ion (Li-ion) and other technologies. As electronic devices seek to provide increased processing power in smaller footprints, the demands on battery size and capacity increase as well. Embodiments of the present disclosure address these and other issues.

### BRIEF DESCRIPTION OF THE DRAWINGS

Embodiments will be readily understood by the following detailed description in conjunction with the accompanying drawings. To facilitate this description, like reference numerals designate like structural elements. Embodiments are illustrated by way of example and not by way of limitation in the figures of the accompanying drawings.
Figures 1A and 1B illustrate an example of the components of a lithium ion pouch cell in accordance with various embodiments of the present disclosure.
Figures 2, 3, 4A, and 4B illustrate different views showing examples of adjacent tab placement (ATP) configurations for batteries in accordance with various embodiments of the present disclosure.
Figure 5 illustrates a graph showing improved performance of an ATP-based battery cell relative to other battery cells in accordance with various embodiments of the present disclosure.
Figures 6A, 6B, and 6C illustrate alternate battery cell configurations in accordance with various embodiments of the present disclosure.
Figure 7 illustrates an example of a smart device, computer system, or a System-on-Chip (SoC) that may include one or more batteries described herein in accordance with some embodiments.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A or B" and "A/B" mean (A), (B), or (A and B). In certain instances, descriptions of well-known devices, circuits, and methods are omitted so as not to obscure the description of the various embodiments with unnecessary detail. For the purposes of the present document, the phrases "A or B" and "A/B" mean (A), (B), or (A and B).

The terms "substantially," "close," "approximately," "near," and "about," generally refer to being within +/- 10% of a target value. Unless otherwise specified the use of the ordinal adjectives "first," "second," and "third," etc., to describe a common object, merely indicate that different instances of like objects are being referred to, and are not intended to imply that the objects so described must be in a given sequence, either temporally, spatially, in ranking or in any other manner.

As used herein, the term "circuitry" may refer to, be part of, or include an Application Specific Integrated Circuit (ASIC), an electronic circuit, a processor (shared, dedicated, or group), a combinational logic circuit, and/or other suitable hardware components that provide the described functionality. As used herein, "computer-implemented method" may refer to any method executed by one or more processors, a computer system having one or more processors, a mobile device such as a smartphone (which may include one or more processors), a tablet, a laptop computer, a set-top box, a gaming console, and so forth.

As introduced above, there is a significant need to provide batteries with increased system performance and reduced footprint to meet the needs of current (and future) electronic devices. System performance is dependent on the peak discharge and sustained discharge capability of the battery pack. The peak power and sustained power that can be delivered to the system is dependent on a number of factors, including: the peak current support capability of the battery; the sustained current support capability of the battery; the Vsysmin (minimum system voltage as determined by the system design); the battery path impedance (battery pack non-cell impedance and system impedance); and cell impedance.

Batteries in the detachable space (e.g., premium tablet devices), or non-clamshell designs that use Li-ion pouch cells, are typically built with a one-cell (1S or 1 Series) configuration to support high-frequency power management integrated circuits (PMICs). Among other things, such configurations typically consume the least real estate within a device with their relatively low z-height and compact designs, while offering high-efficiency in power conversion.

For other devices, such as the thin & light (T&L) notebook category, it may be preferable to operate with two-cell (2S or 2 Series) batteries to provide efficient power conversion and long battery-life. However, providing adequate performance is a concern for 2S-based designs due to the low difference between the battery voltage range (6V to 8.8V) and the Vsysmin (5.6V to power the 5V buck regulator (VR)).

Additionally, the capacity of a battery determines the battery-life that the device can support. The higher the battery capacity, the longer the device can last before needing a recharge. Batteries enabled with higher energy density (to support higher battery-life) have higher cell impedances leading to a higher drop in the voltage delivered at the Vsys node, as well as greater internal losses and hence increase in temperature over the pack when either charging or discharging at a sustained high-power leading to accelerated aging and battery degradation.

Accordingly, low-profile battery packs are often required for 1S premium tablet designs and 2S T&L designs. Additionally, tuning cells for higher energy density inevitably leads to higher cell impedance. Furthermore, high cell impedance causes higher IR drop to directly impact the output power and generate undesired heat that expedites cell aging.

In conventional cells, the cell impedance contributes to 60% of the path impedance over which power is delivered. Due to this, it is not possible to: provide higher sustained power to support longer Power Level 2 (PL2) durations during discharge, provide higher peak power to support higher Power Level 4 (PL4) numbers during discharge, fast-charge the battery pack in truly short durations with 2C or higher charge-rate.

All these issues can potentially hurt the user experience (UX) and available power from the battery pack is under-utilized. Embodiments of the present disclosure address these and other issues by utilizing a novel multi-tab attachment on the cells for such 1S/2S battery config-based designs that will reduce the cell impedance without any increase in cell thickness.

Previous battery solutions include multi-tab welding, center tab placement, and intermediate tab. In Multi-Tab Welding (MTW), the tabs are welded to the polarity material coated foil with a placement such that they effectively get stacked when wound to make the cell as a jelly roll structure. Due to multiple tabs providing short current return paths to the reaction centers on the jellyroll, the cell impedance is effectively reduced by approximately 70 to 80% of the impedance in a conventional tab placement-based cell.

In Center Tab Placement (CTP), the tabs are welded to the polarity material coated foil with a placement such that they are located closer to the center in the open jellyroll sheets. The cell impedance is reduced compared to tab placement at the edge of the sheets (as in conventional tab placement-based cells) but is not as low as the impedance that can be achieved with MTW cells. What is achievable is 20% to 30% reduction in DC impedance in comparison with conventional cells.

With Intermediate tabs (ITP) as part of the current collector sheets, current collector sheets of the pouch cell could have the foil stamped to have intermediate tabs that are connected to lead tabs. This could be implemented with MTP or CTP cell structures.

Each of these previous solutions have a number of drawbacks. For example: in MTW cells, as multiple tabs are stacked one on top of the other and are then welded together, the minimum z-height to accommodate such MTW cells is 5mm. The max z-height available in current state-of-the-art premium tablet and T&L detachable devices for the battery pack is ≤2.7mm (inclusive of the volume for the battery swell). Given the system Z-height limitations, usage of MTW Cells in Premium tablets and convertible devices is not practical. In CTP, by the strategic placement of the tabs, the overall thickness of the cell can be restricted to 2.7mm. But the overall DC and AC impedances reduce by 35% to 45%, and temperature rise reduces by 8%, in comparison with a conventional tab-placement cell. Intermediate tabs are made by cutting battery current collectors and/or electrodes. However, making such intermediate tabs and winding rectangular sheets with intermediate tabs during high-speed manufacturing process is difficult, resulting in yield loss.

Embodiments of the present disclosure address these and other issues with a strategic placement and welding of multiple cell tabs to the foil that is wound, such that the tabs don't stack-up when jelly rolled. Embodiments of this disclosure (e.g., having a physical assembly where the tabs are adjacent/offset instead of being piled up) provide a number of advantages, including:
- Batteries can effectively use intra-cell space that can afford longer electrode sheet in same outer cell dimension;
- The effective cell thickness does not increase (unlike MTW);
- Tabs have closer access to the reaction centers, the current return path is reduced thus decreasing the impedance of the cell (better than CTP);
- Reduction in cell impedance is better than CTP cells without change in the cell thickness enables better utilization of available battery pack energy;
- Enables higher charge rate due to reduced power dissipation over the cell impedance;
- Enables higher discharge capability for a given battery chemistry and available volume;
- Lower cell impedance means lower heat generation, which slows aging;
- Existing manufacturing process can be used;
- The proposed embodiments are easier to produce as it avoids complex stamping and avoids a complex intermediate tabs process, resulting in yield improvement;
- Unlike the intermediate tab process, an electrode/current collector cut is not required, resulting in less waste of material; and
- Provides fast-charge, better battery-life and thin & light device enabling.

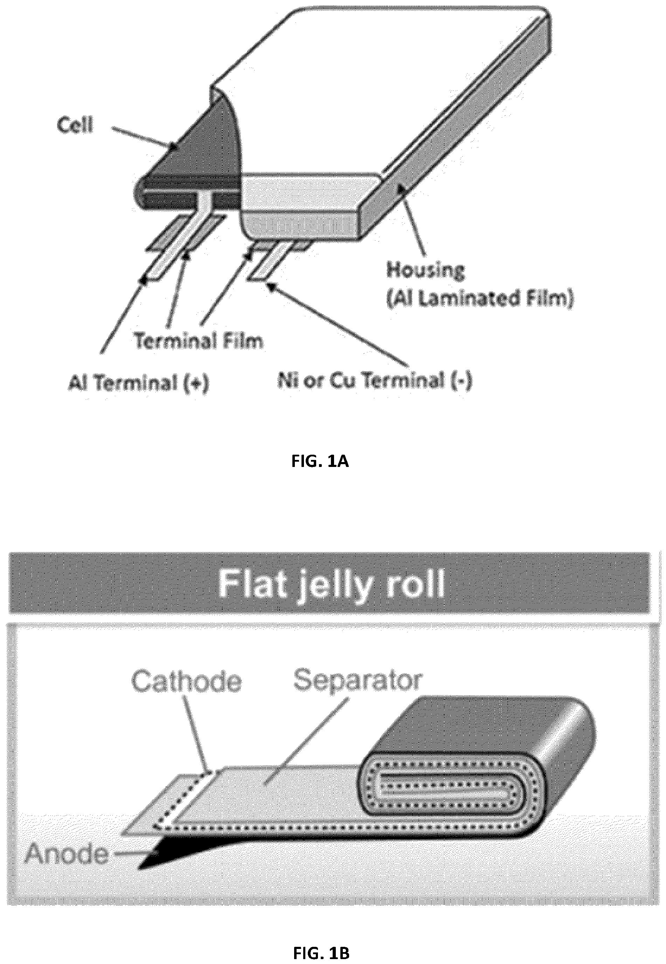

Figures 1A and 1B illustrate an example of the components of a lithium ion pouch cell. In the example shown in Figure 1A, the cell comprises a laminated aluminum film as the case that holds the active material coated foils, the separator, and the tabs together. The tabs exit the cell casing, which allows the cell's energy to be transferred to an external source. For mechanical rigidity, the tabs are run though the top seal to hold them in place.

As illustrated in Figure 1B, the lithium ion pouch cell includes an anode foil made of copper coated with active material such as graphite, a cathode foil made of aluminum coated with active material such as lithium cobalt oxide, and a separator to ensure the plates do not touch but is porous enough to allow chemical reactions between the two via an electrolyte solution.

Figure 1B further illustrates how the layers of the battery are rolled up to form a "jelly roll" configuration. It should be noted that while examples of embodiments of the present disclosure are described in conjunction with jelly-roll configurations, alternate embodiments may be utilized in other battery configurations as well, such as stacked cells. Similarly, embodiments of the present disclosure may be utilized in conjunction with battery cells in any suitable size, shape, or configuration, including rectangular-shaped cells as well as cells having an irregular shape.

The anode, cathode and separator are manufactured with relative precision. The more the active material coating for the anode and cathode in the battery, the more is the energy that it can deliver. The jellyroll sheets are relatively thin as shown in TABLE 1 as an example.

**Table 1: Thickness of the ingredients in a jellyroll**

| **Layer** | **Thickness** |
|---|---|
| Separator | ~20um |
| Cathode foil | ~20um |
| Cathode active Oxidizing material | ~60um |
| Anode foil | ~12um |
| Anode active reducing material | ~39um |

The layers of the battery can be wound into a large variety of shapes and sizes and the tabs attached in different locations. The cell tabs can be connected in multiple ways to the foils in a jellyroll to reduce the cell impedance.

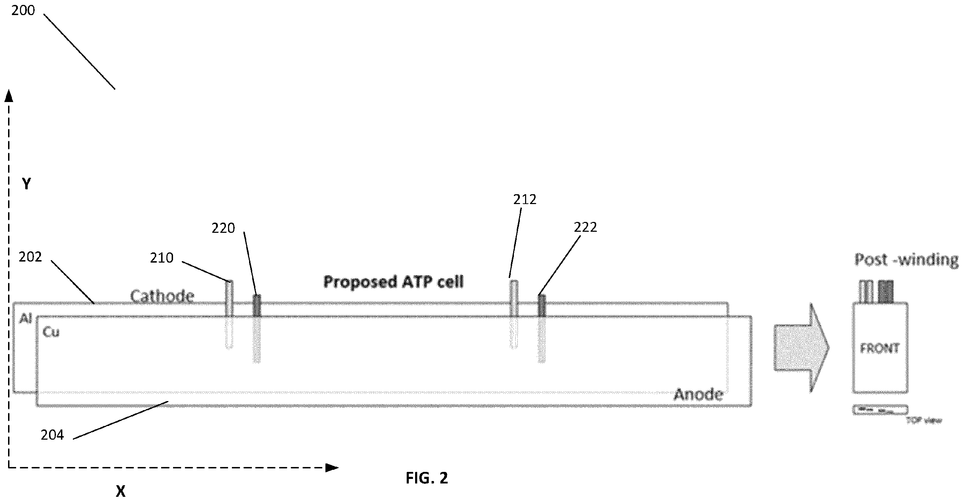

Some embodiments include a strategic placement of cell tabs on the open jellyroll such that the respective polarity tabs do not stack up when rolled into the structure of a cell (unlike MTW cells, for example). Figures 2, 3, 4A, and 4B show examples of batteries in accordance with various embodiments of the present disclosure. As described below, these examples describe batteries with two sets of anode/cathode tabs for the sake of simplicity. However, alternate embodiments may utilize any suitable number of tab sets. For example, based on the available width of the cell and the width of each tab, the number of tab-sets can be increased to decrease the cell impedance further.

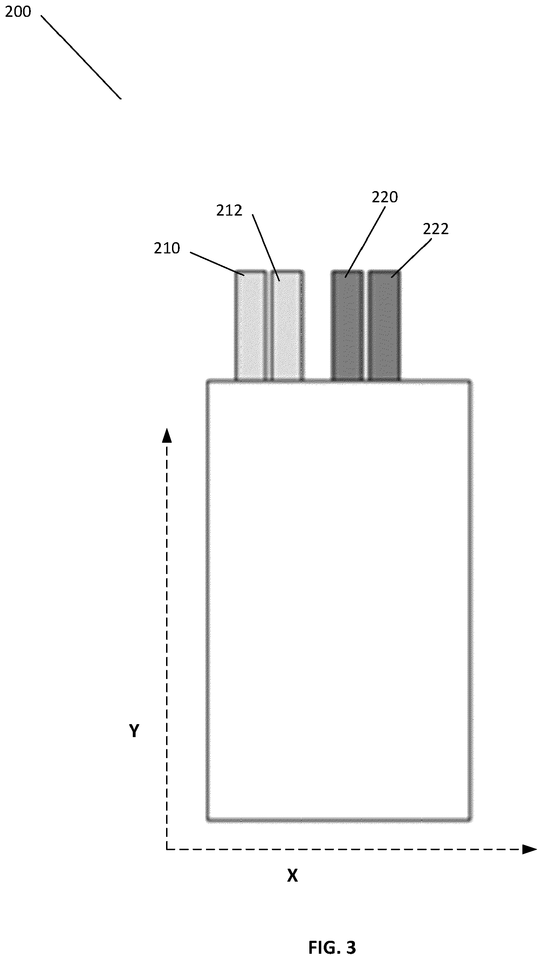

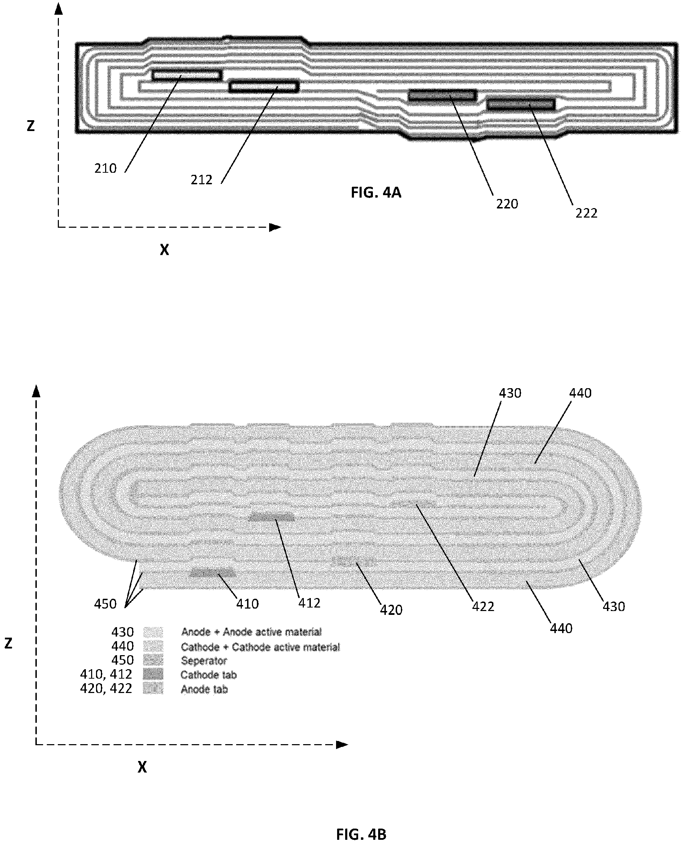

As illustrated in the example shown in Figure 2, battery 200 is a lithium-ion pouch cell that includes an anode layer 204 and a cathode layer 202. As illustrated previously in Figures 1A and 1B, a separator layer (not shown in Figure 2) is disposed between the anode layer and the cathode layer. The leftmost portion of Figure 2 illustrates the components in an unrolled state, while the rightmost portion shows a front view of the jellyroll configuration after the layers are rolled together, with Figure 3 providing a closeup view of the front of the jellyroll configuration and Figures 4A and 4B providing examples of top-down views of the jelly roll.

The battery 200 includes a first tab 210 coupled to the cathode layer and a second tab 212 coupled to the cathode layer. The first tab 210 and the second tab 212 extend from the cathode layer in a first direction, namely the Y-axis shown at the left side of the structure in Figures 2 and 3. Figures 4A and 4B further illustrate the orientation of the tabs 210, 212 relative to the first (Y) direction, second (X) direction, and third (Z) direction, which may also be referred to as the width (X), length (Y), and height (Z) of the battery 200 in this example. The second (X) direction and third (Y) direction are perpendicular to each other in a first plane and the first (Z) direction is perpendicular to both the second (X) and third (Y) direction in a second plane.

As shown in these figures, the tabs 210, 212 do not overlap with each other in either the second (width/X) direction or third (height/Z) direction. In Figure 3, for example, the cathode tabs 210, 212 are adjacent to each other in the X-direction, but do not overlap (they are offset from each other). Likewise, in the examples shown in Figure 4A and 4B (looking at the top of the battery 200 or along the Z-X directions) tab 210 is offset with tab 212 in the Z direction as well.

The battery 200 further includes a third tab 220 coupled to the anode layer 204 and a fourth tab 222 coupled to the anode layer 204. Similar to tabs 210, and 212, the third tab 220 and the fourth tab 222 extend from the anode layer 204 in the first (Y) direction and do not overlap with each other, or with the first or second tabs, in the second (X) direction or third (Z) direction.

The anode layer 204 may comprise any suitable material or combination of materials. For example, in some embodiments the anode layer 204 comprises a copper foil coated with an active material. In some embodiments, the active material comprises graphite. The anode layer may also be of any suitable, size, shape, or configuration. In the examples shown in Figures 2, 3, and 4A-4B, for example, the anode layer has a thickness of about 12 um and its active material has a thickness of about 39um.

Similarly, the cathode layer 202 may comprise any suitable material or combination of materials. In some embodiments, the cathode layer 202 comprises an aluminum foil coated with an active material, such as lithium cobalt oxide. The cathode layer 202 may also be of any suitable, size, shape, or configuration. For example, the cathode layer 202 may have a thickness of about 20 um and the active material may have a thickness of about 60um.

The cathode tabs 210, 212 and anode tabs 220, 222 may be of any size, shape, or configuration, and may comprise any suitable material(s). For example, the first and second (cathode) tabs 210, 212 may comprise aluminum and the third and fourth (anode) tabs 220, 222 may comprise nickel or copper. In various embodiments, the various tabs may be offset by any suitable distances. In the examples depicted in Figures 2, 3, 4A, and 4B, for instance, the first 210 and second 212 tabs are offset with each other in the second (X) direction by between about 15 um and about 55 um. Likewise, the third 220 and fourth 222 tabs are offset with each other in the second (X) direction by between about 15 um and about 55 um.

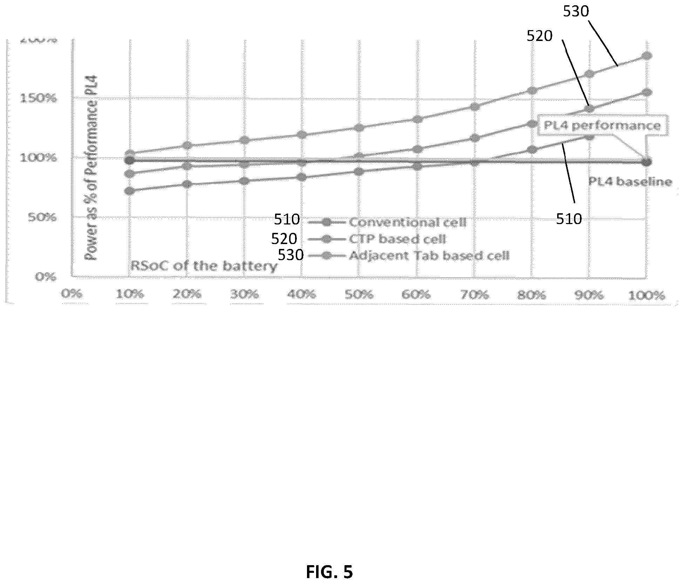

Among other things, embodiments of the present disclosure help make it possible to reduce battery cell impedance by a significant amount (e.g., ten to thirty percent or more) without increasing battery cell thickness. For example, Figure 5 illustrates an example of a graph showing the relative power as a percentage of performance for an embodiment of an adjacent tab-based cell of the present disclosure (indicated by trace 530) relative to a conventional cell (trace 510) and a CTP-based cell (trace 520). Accordingly, embodiments of the present disclosure can help provide higher instantaneous power to increase responsiveness.

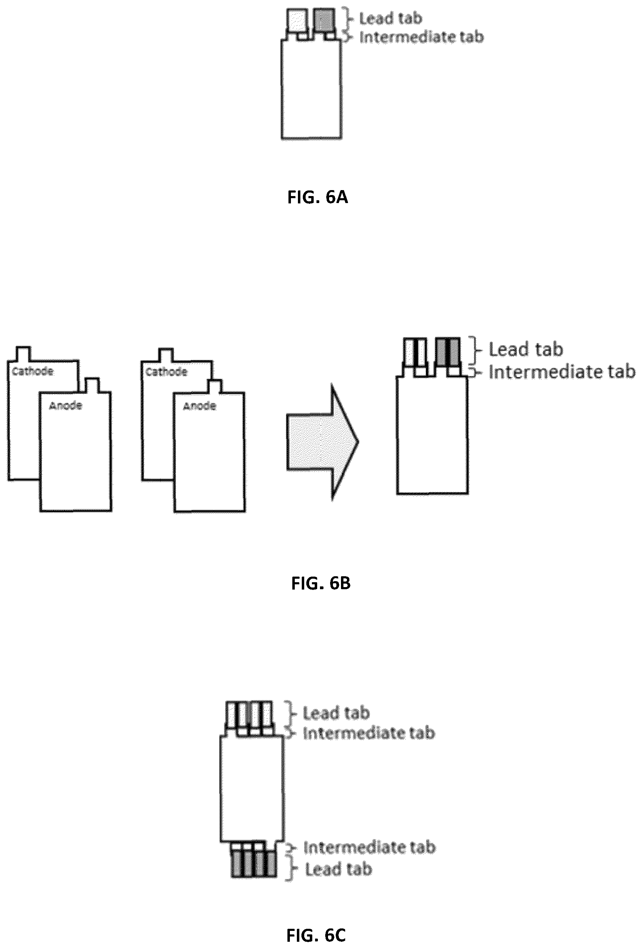

Figures 6A, 6B, and 6C illustrate examples of some alternate configurations that may be utilized in conjunction with embodiments of the present disclosure. In Figure 6B, for example, a structure may have multiple intermediate tabs and multiple lead tabs as below. In particular, two respective cathode tabs (on the left of the figure) are coupled to the cathode layer via respective intermediate tabs extending from the cathode layer. Similarly, two respective anode tabs (on the right of the figure) are coupled to the anode layer via respective intermediate tabs extending from the anode layer.

A structure may alternatively have multiple intermediate tabs with one lead tab for each terminal. For example, Figure 6A shows a configuration where a single cathode tab is coupled to a pair of intermediate tabs extending from the cathode layer and a single anode tab is coupled to a pair of intermediate tabs extending from the anode layer.

Figure 6C illustrates an example where tabs extend from different sides of the cathode and anode layers. In this example, a set of cathode tabs extend from the north (top) of the cathode layer while a set of anode tabs extend from the south (bottom) of the anode layer. In this example, the respective tabs are coupled to the cathode and anode layers via respective intermediate tabs, though in alternate embodiments the cathode and anode tabs may be coupled directly to the cathode and anode layers, respectively.

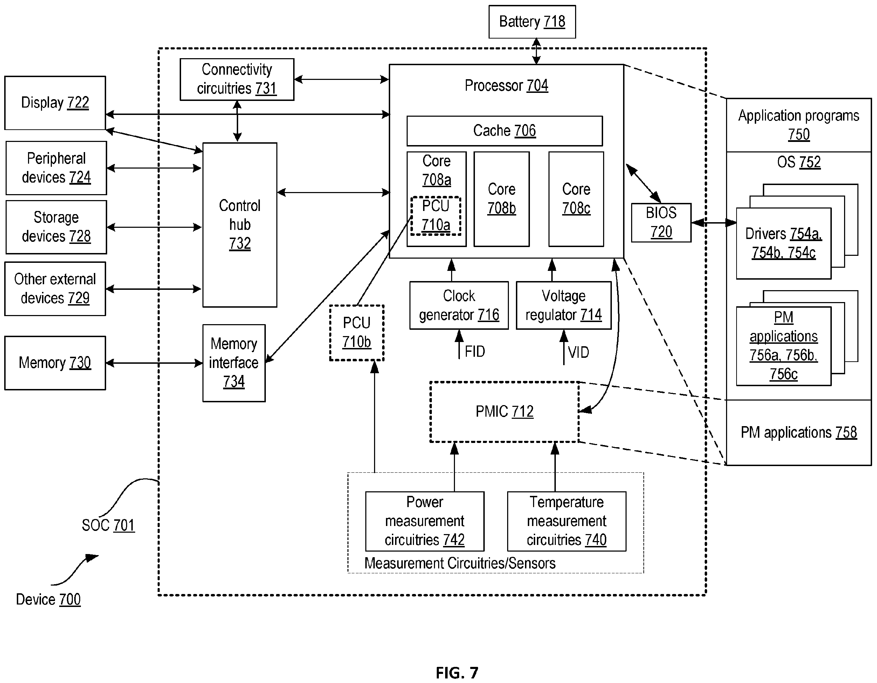

Figure 7 illustrates a system (e.g., a smart device or a computer system or a System-on-Chip (SoC)), that may include one or more of the batteries described herein (e.g., as battery 718) in accordance with some embodiments.

In some embodiments, device 700 represents an appropriate computing device, such as a computing tablet, a mobile phone or smart-phone, a laptop, a desktop, an Internet-of-Things (IOT) device, a server, a wearable device, a set-top box, a wireless-enabled e-reader, or the like. It will be understood that certain components are shown generally, and not all components of such a device are shown in device 700. The apparatus and/or software for controlling wake sources in a system to reduce power consumption in sleep state can be in the wireless connectivity circuitries 731, PCU 710, and/or other logic blocks (e.g., operating system 752) that can manage power for the computer system.

In an example, the device 700 comprises an SoC (System-on-Chip) 701. An example boundary of the SoC 701 is illustrated using dotted lines in Fig. 7, with some example components being illustrated to be included within SoC 701 - however, SoC 701 may include any appropriate components of device 700.

In some embodiments, device 700 includes processor 704. Processor 704 can include one or more physical devices, such as microprocessors, application processors, microcontrollers, programmable logic devices, processing cores, or other processing means. The processing operations performed by processor 704 include the execution of an operating platform or operating system on which applications and/or device functions are executed. The processing operations include operations related to I/O (input/output) with a human user or with other devices, operations related to power management, operations related to connecting computing device 700 to another device, and/or the like. The processing operations may also include operations related to audio I/O and/or display I/O.

In some embodiments, processor 704 includes multiple processing cores (also referred to as cores) 708a, 708b, 708c. Although merely three cores 708a, 708b, 708c are illustrated in Fig. 7, processor 704 may include any other appropriate number of processing cores, e.g., tens, or even hundreds of processing cores. Processor cores 708a, 708b, 708c may be implemented on a single integrated circuit (IC) chip. Moreover, the chip may include one or more shared and/or private caches, buses or interconnections, graphics and/or memory controllers, or other components.

In some embodiments, processor 704 includes cache 706. In an example, sections of cache 706 may be dedicated to individual cores 708 (e.g., a first section of cache 706 dedicated to core 708a, a second section of cache 706 dedicated to core 708b, and so on). In an example, one or more sections of cache 706 may be shared among two or more of cores 708. Cache 706 may be split in different levels, e.g., level 1 (L1) cache, level 2 (L2) cache, level 3 (L3) cache, etc.

In some embodiments, processor core 704 may include a fetch unit to fetch instructions (including instructions with conditional branches) for execution by the core 704. The instructions may be fetched from any storage devices such as the memory 730. Processor core 704 may also include a decode unit to decode the fetched instruction. For example, the decode unit may decode the fetched instruction into a plurality of micro-operations. Processor core 704 may include a schedule unit to perform various operations associated with storing decoded instructions. For example, the schedule unit may hold data from the decode unit until the instructions are ready for dispatch, e.g., until all source values of a decoded instruction become available. In one embodiment, the schedule unit may schedule and/or issue (or dispatch) decoded instructions to an execution unit for execution.

The execution unit may execute the dispatched instructions after they are decoded (e.g., by the decode unit) and dispatched (e.g., by the schedule unit). In an embodiment, the execution unit may include more than one execution unit (such as an imaging computational unit, a graphics computational unit, a general-purpose computational unit, etc.). The execution unit may also perform various arithmetic operations such as addition, subtraction, multiplication, and/or division, and may include one or more an arithmetic logic units (ALUs). In an embodiment, a co-processor (not shown) may perform various arithmetic operations in conjunction with the execution unit.

Further, execution unit may execute instructions out-of-order. Hence, processor core 704 may be an out-of-order processor core in one embodiment. Processor core 704 may also include a retirement unit. The retirement unit may retire executed instructions after they are committed. In an embodiment, retirement of the executed instructions may result in processor state being committed from the execution of the instructions, physical registers used by the instructions being de-allocated, etc. Processor core 704 may also include a bus unit to enable communication between components of processor core 704 and other components via one or more buses. Processor core 704 may also include one or more registers to store data accessed by various components of the core 704 (such as values related to assigned app priorities and/or sub-system states (modes) association.

In some embodiments, device 700 comprises connectivity circuitries 731. For example, connectivity circuitries 731 includes hardware devices (e.g., wireless and/or wired connectors and communication hardware) and/or software components (e.g., drivers, protocol stacks), e.g., to enable device 700 to communicate with external devices. Device 700 may be separate from the external devices, such as other computing devices, wireless access points or base stations, etc.

In an example, connectivity circuitries 731 may include multiple different types of connectivity. To generalize, the connectivity circuitries 731 may include cellular connectivity circuitries, wireless connectivity circuitries, etc. Cellular connectivity circuitries of connectivity circuitries 731 refers generally to cellular network connectivity provided by wireless carriers, such as provided via GSM (global system for mobile communications) or variations or derivatives, CDMA (code division multiple access) or variations or derivatives, TDM (time division multiplexing) or variations or derivatives, 3rd Generation Partnership Project (3GPP) Universal Mobile Telecommunications Systems (UMTS) system or variations or derivatives, 3GPP Long-Term Evolution (LTE) system or variations or derivatives, 3GPP LTE-Advanced (LTE-A) system or variations or derivatives, Fifth Generation (5G) wireless system or variations or derivatives, 5G mobile networks system or variations or derivatives, 5G New Radio (NR) system or variations or derivatives, or other cellular service standards. Wireless connectivity circuitries (or wireless interface) of the connectivity circuitries 731 refers to wireless connectivity that is not cellular, and can include personal area networks (such as Bluetooth, Near Field, etc.), local area networks (such as Wi-Fi), and/or wide area networks (such as WiMax), and/or other wireless communication. In an example, connectivity circuitries 731 may include a network interface, such as a wired or wireless interface, e.g., so that a system embodiment may be incorporated into a wireless device, for example, a cell phone or personal digital assistant.

In some embodiments, device 700 comprises control hub 732, which represents hardware devices and/or software components related to interaction with one or more I/O devices. For example, processor 704 may communicate with one or more of display 722, one or more peripheral devices 724, storage devices 728, one or more other external devices 729, etc., via control hub 732. Control hub 732 may be a chipset, a Platform Control Hub (PCH), and/or the like.

For example, control hub 732 illustrates one or more connection points for additional devices that connect to device 700, e.g., through which a user might interact with the system. For example, devices (e.g., devices 729) that can be attached to device 700 include microphone devices, speaker or stereo systems, audio devices, video systems or other display devices, keyboard or keypad devices, or other I/O devices for use with specific applications such as card readers or other devices.

As mentioned above, control hub 732 can interact with audio devices, display 722, etc. For example, input through a microphone or other audio device can provide input or commands for one or more applications or functions of device 700. Additionally, audio output can be provided instead of, or in addition to display output. In another example, if display 722 includes a touch screen, display 722 also acts as an input device, which can be at least partially managed by control hub 732. There can also be additional buttons or switches on computing device 700 to provide I/O functions managed by control hub 732. In one embodiment, control hub 732 manages devices such as accelerometers, cameras, light sensors or other environmental sensors, or other hardware that can be included in device 700. The input can be part of direct user interaction, as well as providing environmental input to the system to influence its operations (such as filtering for noise, adjusting displays for brightness detection, applying a flash for a camera, or other features).

In some embodiments, control hub 732 may couple to various devices using any appropriate communication protocol, e.g., PCIe (Peripheral Component Interconnect Express), USB (Universal Serial Bus), Thunderbolt, High Definition Multimedia Interface (HDMI), Firewire, etc.

In some embodiments, display 722 represents hardware (e.g., display devices) and software (e.g., drivers) components that provide a visual and/or tactile display for a user to interact with device 700. Display 722 may include a display interface, a display screen, and/or hardware device used to provide a display to a user. In some embodiments, display 722 includes a touch screen (or touch pad) device that provides both output and input to a user. In an example, display 722 may communicate directly with the processor 704. Display 722 can be one or more of an internal display device, as in a mobile electronic device or a laptop device or an external display device attached via a display interface (e.g., DisplayPort, etc.). In one embodiment display 722 can be a head mounted display (HMD) such as a stereoscopic display device for use in virtual reality (VR) applications or augmented reality (AR) applications.

In some embodiments, and although not illustrated in the figure, in addition to (or instead of) processor 704, device 700 may include Graphics Processing Unit (GPU) comprising one or more graphics processing cores, which may control one or more aspects of displaying contents on display 722.

Control hub 732 (or platform controller hub) may include hardware interfaces and connectors, as well as software components (e.g., drivers, protocol stacks) to make peripheral connections, e.g., to peripheral devices 724.

It will be understood that device 700 could both be a peripheral device to other computing devices, as well as have peripheral devices connected to it. Device 700 may have a "docking" connector to connect to other computing devices for purposes such as managing (e.g., downloading and/or uploading, changing, synchronizing) content on device 700. Additionally, a docking connector can allow device 700 to connect to certain peripherals that allow computing device 700 to control content output, for example, to audiovisual or other systems.

In addition to a proprietary docking connector or other proprietary connection hardware, device 700 can make peripheral connections via common or standards-based connectors. Common types can include a Universal Serial Bus (USB) connector (which can include any of a number of different hardware interfaces), DisplayPort including MiniDisplayPort (MDP), High Definition Multimedia Interface (HDMI), Firewire, or other types.

In some embodiments, connectivity circuitries 731 may be coupled to control hub 732, e.g., in addition to, or instead of, being coupled directly to the processor 704. In some embodiments, display 722 may be coupled to control hub 732, e.g., in addition to, or instead of, being coupled directly to processor 704.

In some embodiments, device 700 comprises memory 730 coupled to processor 704 via memory interface 734. Memory 730 includes memory devices for storing information in device 700.

In some embodiments, memory 730 includes apparatus to maintain stable clocking as described with reference to various embodiments. Memory can include nonvolatile (state does not change if power to the memory device is interrupted) and/or volatile (state is indeterminate if power to the memory device is interrupted) memory devices. Memory device 730 can be a dynamic random-access memory (DRAM) device, a static random-access memory (SRAM) device, flash memory device, phase-change memory device, or some other memory device having suitable performance to serve as process memory. In one embodiment, memory 730 can operate as system memory for device 700, to store data and instructions for use when the one or more processors 704 executes an application or process. Memory 730 can store application data, user data, music, photos, documents, or other data, as well as system data (whether long-term or temporary) related to the execution of the applications and functions of device 700.

Elements of various embodiments and examples are also provided as a machine-readable medium (e.g., memory 730) for storing the computer-executable instructions (e.g., instructions to implement any other processes discussed herein). The machine-readable medium (e.g., memory 730) may include, but is not limited to, flash memory, optical disks, CD-ROMs, DVD ROMs, RAMs, EPROMs, EEPROMs, magnetic or optical cards, phase change memory (PCM), or other types of machine-readable media suitable for storing electronic or computer-executable instructions. For example, embodiments of the disclosure may be downloaded as a computer program (e.g., BIOS) which may be transferred from a remote computer (e.g., a server) to a requesting computer (e.g., a client) by way of data signals via a communication link (e.g., a modem or network connection).

In some embodiments, device 700 comprises temperature measurement circuitries 740, e.g., for measuring temperature of various components of device 700. In an example, temperature measurement circuitries 740 may be embedded, or coupled or attached to various components, whose temperature are to be measured and monitored. For example, temperature measurement circuitries 740 may measure temperature of (or within) one or more of cores 708a, 708b, 708c, voltage regulator 714, memory 730, a mother-board of SoC 701, and/or any appropriate component of device 700.

In some embodiments, device 700 comprises power measurement circuitries 742, e.g., for measuring power consumed by one or more components of the device 700. In an example, in addition to, or instead of, measuring power, the power measurement circuitries 742 may measure voltage and/or current. In an example, the power measurement circuitries 742 may be embedded, or coupled or attached to various components, whose power, voltage, and/or current consumption are to be measured and monitored. For example, power measurement circuitries 742 may measure power, current and/or voltage supplied by one or more voltage regulators 714, power supplied to SoC 701, power supplied to device 700, power consumed by processor 704 (or any other component) of device 700, etc.

In some embodiments, device 700 comprises one or more voltage regulator circuitries, generally referred to as voltage regulator (VR) 714. VR 714 generates signals at appropriate voltage levels, which may be supplied to operate any appropriate components of the device 700. Merely as an example, VR 714 is illustrated to be supplying signals to processor 704 of device 700. In some embodiments, VR 714 receives one or more Voltage Identification (VID) signals, and generates the voltage signal at an appropriate level, based on the VID signals. Various type of VRs may be utilized for the VR 714. For example, VR 714 may include a "buck" VR, "boost" VR, a combination of buck and boost VRs, low dropout (LDO) regulators, switching DC-DC regulators, constant-on-time controller-based DC-DC regulator, etc. Buck VR is generally used in power delivery applications in which an input voltage needs to be transformed to an output voltage in a ratio that is smaller than unity. Boost VR is generally used in power delivery applications in which an input voltage needs to be transformed to an output voltage in a ratio that is larger than unity. In some embodiments, each processor core has its own VR, which is controlled by PCU 710a/b and/or PMIC 712. In some embodiments, each core has a network of distributed LDOs to provide efficient control for power management. The LDOs can be digital, analog, or a combination of digital or analog LDOs. In some embodiments, VR 714 includes current tracking apparatus to measure current through power supply rail(s).

In some embodiments, device 700 comprises one or more clock generator circuitries, generally referred to as clock generator 716. Clock generator 716 generates clock signals at appropriate frequency levels, which may be supplied to any appropriate components of device 700. Merely as an example, clock generator 716 is illustrated to be supplying clock signals to processor 704 of device 700. In some embodiments, clock generator 716 receives one or more Frequency Identification (FID) signals, and generates the clock signals at an appropriate frequency, based on the FID signals.

In some embodiments, device 700 comprises battery 718 supplying power to various components of device 700. Merely as an example, battery 718 is illustrated to be supplying power to processor 704. Although not illustrated in the figures, device 700 may comprise a charging circuitry, e.g., to recharge the battery, based on Alternating Current (AC) power supply received from an AC adapter.

In some embodiments, device 700 comprises Power Control Unit (PCU) 710 (also referred to as Power Management Unit (PMU), Power Controller, etc.). In an example, some sections of PCU 710 may be implemented by one or more processing cores 708, and these sections of PCU 710 are symbolically illustrated using a dotted box and labelled PCU 710a. In an example, some other sections of PCU 710 may be implemented outside the processing cores 708, and these sections of PCU 710 are symbolically illustrated using a dotted box and labelled as PCU 710b. PCU 710 may implement various power management operations for device 700. PCU 710 may include hardware interfaces, hardware circuitries, connectors, registers, etc., as well as software components (e.g., drivers, protocol stacks), to implement various power management operations for device 700.

In some embodiments, device 700 comprises Power Management Integrated Circuit (PMIC) 712, e.g., to implement various power management operations for device 700. In some embodiments, PMIC 712 is a Reconfigurable Power Management ICs (RPMICs) and/or an IMVP (Intel^{®} Mobile Voltage Positioning). In an example, the PMIC is within an IC chip separate from processor 704. The may implement various power management operations for device 700. PMIC 712 may include hardware interfaces, hardware circuitries, connectors, registers, etc., as well as software components (e.g., drivers, protocol stacks), to implement various power management operations for device 700.

In an example, device 700 comprises one or both PCU 710 or PMIC 712. In an example, any one of PCU 710 or PMIC 712 may be absent in device 700, and hence, these components are illustrated using dotted lines.

Various power management operations of device 700 may be performed by PCU 710, by PMIC 712, or by a combination of PCU 710 and PMIC 712. For example, PCU 710 and/or PMIC 712 may select a power state (e.g., P-state) for various components of device 700. For example, PCU 710 and/or PMIC 712 may select a power state (e.g., in accordance with the ACPI (Advanced Configuration and Power Interface) specification) for various components of device 700. Merely as an example, PCU 710 and/or PMIC 712 may cause various components of the device 700 to transition to a sleep state, to an active state, to an appropriate C state (e.g., C0 state, or another appropriate C state, in accordance with the ACPI specification), etc. In an example, PCU 710 and/or PMIC 712 may control a voltage output by VR 714 and/or a frequency of a clock signal output by the clock generator, e.g., by outputting the VID signal and/or the FID signal, respectively. In an example, PCU 710 and/or PMIC 712 may control battery power usage, charging of battery 718, and features related to power saving operation.

The clock generator 716 can comprise a phase locked loop (PLL), frequency locked loop (FLL), or any suitable clock source. In some embodiments, each core of processor 704 has its own clock source. As such, each core can operate at a frequency independent of the frequency of operation of the other core. In some embodiments, PCU 710 and/or PMIC 712 performs adaptive or dynamic frequency scaling or adjustment. For example, clock frequency of a processor core can be increased if the core is not operating at its maximum power consumption threshold or limit. In some embodiments, PCU 710 and/or PMIC 712 determines the operating condition of each core of a processor, and opportunistically adjusts frequency and/or power supply voltage of that core without the core clocking source (e.g., PLL of that core) losing lock when the PCU 710 and/or PMIC 712 determines that the core is operating below a target performance level. For example, if a core is drawing current from a power supply rail less than a total current allocated for that core or processor 704, then PCU 710 and/or PMIC 712 can temporality increase the power draw for that core or processor 704 (e.g., by increasing clock frequency and/or power supply voltage level) so that the core or processor 704 can perform at higher performance level. As such, voltage and/or frequency can be increased temporality for processor 704 without violating product reliability.

In an example, PCU 710 and/or PMIC 712 may perform power management operations, e.g., based at least in part on receiving measurements from power measurement circuitries 742, temperature measurement circuitries 740, charge level of battery 718, and/or any other appropriate information that may be used for power management. To that end, PMIC 712 is communicatively coupled to one or more sensors to sense/detect various values/variations in one or more factors having an effect on power/thermal behavior of the system/platform. Examples of the one or more factors include electrical current, voltage droop, temperature, operating frequency, operating voltage, power consumption, inter-core communication activity, etc. One or more of these sensors may be provided in physical proximity (and/or thermal contact/coupling) with one or more components or logic/IP blocks of a computing system. Additionally, sensor(s) may be directly coupled to PCU 710 and/or PMIC 712 in at least one embodiment to allow PCU 710 and/or PMIC 712 to manage processor core energy at least in part based on value(s) detected by one or more of the sensors.

Also illustrated is an example software stack of device 700 (although not all elements of the software stack are illustrated). Merely as an example, processors 704 may execute application programs 750, Operating System 752, one or more Power Management (PM) specific application programs (e.g., generically referred to as PM applications 758), and/or the like. PM applications 758 may also be executed by the PCU 710 and/or PMIC 712. OS 752 may also include one or more PM applications 756a, 756b, 756c. The OS 752 may also include various drivers 754a, 754b, 754c, etc., some of which may be specific for power management purposes. In some embodiments, device 700 may further comprise a Basic Input/output System (BIOS) 720. BIOS 720 may communicate with OS 752 (e.g., via one or more drivers 754), communicate with processors 704, etc.

For example, one or more of PM applications 758, 756, drivers 754, BIOS 720, etc. may be used to implement power management specific tasks, e.g., to control voltage and/or frequency of various components of device 700, to control wake-up state, sleep state, and/or any other appropriate power state of various components of device 700, control battery power usage, charging of the battery 718, features related to power saving operation, etc.

In some embodiments, battery 718 is a Li-metal battery with a pressure chamber to allow uniform pressure on a battery. The pressure chamber is supported by metal plates (such as pressure equalization plate) used to give uniform pressure to the battery. The pressure chamber may include pressured gas, elastic material, spring plate, etc. The outer skin of the pressure chamber is free to bow, restrained at its edges by (metal) skin, but still exerts a uniform pressure on the plate that is compressing the battery cell. The pressure chamber gives uniform pressure to battery, which is used to enable high-energy density battery with, for example, 20% more battery life.

In some embodiments, pCode executing on PCU 710a/b has a capability to enable extra compute and telemetries resources for the runtime support of the pCode. Here pCode refers to a firmware executed by PCU 710a/b to manage performance of the SoC 701. For example, pCode may set frequencies and appropriate voltages for the processor. Part of the pCode are accessible via OS 752. In various embodiments, mechanisms and methods are provided that dynamically change an Energy Performance Preference (EPP) value based on workloads, user behavior, and/or system conditions. There may be a well-defined interface between OS 752 and the pCode. The interface may allow or facilitate the software configuration of several parameters and/or may provide hints to the pCode. As an example, an EPP parameter may inform a pCode algorithm as to whether performance or battery life is more important.

This support may be done as well by the OS 752 by including machine-learning support as part of OS 752 and either tuning the EPP value that the OS hints to the hardware (e.g., various components of SoC 701) by machine-learning prediction, or by delivering the machine-learning prediction to the pCode in a manner similar to that done by a Dynamic Tuning Technology (DTT) driver. In this model, OS 752 may have visibility to the same set of telemetries as are available to a DTT. As a result of a DTT machine-learning hint setting, pCode may tune its internal algorithms to achieve optimal power and performance results following the machine-learning prediction of activation type. The pCode as example may increase the responsibility for the processor utilization change to enable fast response for user activity, or may increase the bias for energy saving either by reducing the responsibility for the processor utilization or by saving more power and increasing the performance lost by tuning the energy saving optimization. This approach may facilitate saving more battery life in case the types of activities enabled lose some performance level over what the system can enable. The pCode may include an algorithm for dynamic EPP that may take the two inputs, one from OS 752 and the other from software such as DTT, and may selectively choose to provide higher performance and/or responsiveness. As part of this method, the pCode may enable in the DTT an option to tune its reaction for the DTT for different types of activity.

### EXAMPLES

Some non-limiting Examples of various embodiments are presented below.

Example 1 includes a battery, comprising: an anode layer; a cathode layer; a separator layer between the anode layer and the cathode layer; a first tab coupled to the cathode layer and a second tab coupled to the cathode layer, wherein the first tab and the second tab extend from the cathode layer in a first direction in a first plane and do not overlap with each other in a second direction or third direction, wherein the second direction and third direction are perpendicular to each other in a first plane and the first direction is perpendicular to the second and third direction in a second plane; and a third tab coupled to the anode layer and a fourth tab coupled to the anode layer, wherein the third tab and the fourth tab extend from the anode layer in the first direction and do not overlap with each other, or with the first or second tabs, in the second direction or third direction.

Example 2 includes the battery of example 1 or some other example herein, wherein the battery comprises a lithium-ion pouch cell.

Example 3 includes the battery of example 1 or example 2 or some other example herein, wherein the anode layer comprises a copper foil coated with an active material.

Example 4 includes the battery of example 3 or some other example herein, wherein the active material comprises graphite.

Example 5 includes the battery of example 3 or example 4 or some other example herein, wherein the copper foil has a thickness of about 12 um and the active material has a thickness of about 39 um.

Example 6 includes the battery of any one of examples 1 to 5 or some other example herein, wherein the cathode layer comprises an aluminum foil coated with an active material.

Example 7 includes the battery of example 6 or some other example herein, wherein the active material comprises lithium cobalt oxide.

Example 8 includes the battery of example 6 or example 7 or some other example herein, wherein the aluminum foil has a thickness of about 20 um and the active material has a thickness of about 60 um.

Example 9 includes the battery of any one of examples 1 to 8 or some other example herein, wherein the first and second tabs comprise aluminum or nickel and the third and fourth tabs comprise nickel or copper.

Example 10 includes the battery of any one of examples 1 to 9 or some other example herein, wherein the first and second tabs are offset with each other in the second direction by between about 15 um and about 55 um.

Example 11 includes the battery of any one of examples 1 to 10 or some other example herein, wherein the third and fourth tabs are offset with each other in the second direction by between about 15 um and about 55 um.

Example 12 includes the battery of any one of examples 1 to 11 or some other example herein, wherein the first tab is coupled to the cathode layer via a first intermediate tab and the second tab is coupled to the cathode layer via a second intermediate tab.

Example 13 includes the battery of example 12 or some other example herein, wherein the third tab is coupled to the anode layer via a third intermediate tab and the fourth tab is coupled to the anode layer via a fourth intermediate tab.

Example 14 includes the battery of any one of examples 1 to 13 or some other example herein, wherein the first tab is coupled to the cathode layer via a first plurality of intermediate tabs and the second tab is coupled to the cathode layer via a second plurality of intermediate tabs.

Example 15 includes the battery of example 14 or some other example herein, wherein the third tab is coupled to the anode layer via a third plurality of intermediate tabs and the fourth tab is coupled to the anode layer via a fourth plurality of intermediate tabs.

Example 16 includes a battery, comprising: an anode layer; a cathode layer; a separator layer between the anode layer and the cathode layer; a first tab coupled to the cathode layer and a second tab coupled to the cathode layer, wherein the first tab and the second tab extend from the cathode layer in a first direction in a first plane and do not overlap with each other in a second direction or third direction, wherein the second direction and third direction are perpendicular to each other in a first plane and the first direction is perpendicular to the second and third direction in a second plane; and a third tab coupled to the anode layer and a fourth tab coupled to the anode layer, wherein the third tab and the fourth tab extend from the anode layer in a fourth direction opposite to the first direction and do not overlap with each other in the second direction or third direction.

Example 17 includes the battery of example 16 or some other example herein, wherein the battery comprises a lithium-ion pouch cell.

Example 18 includes the battery of example 16 or example 17 or some other example herein, wherein the anode layer comprises a copper foil coated with an active material comprising graphite, and wherein the copper foil has a thickness of about 12 um and the active material has a thickness of about 39 um.

Example 19 includes the battery of any one of examples 16 to 18 or some other example herein, wherein the cathode layer comprises an aluminum foil coated with an active material comprising lithium cobalt oxide, wherein the aluminum foil has a thickness of about 20 um and the active material has a thickness of about 60 um.

Example 20 includes the battery of any one of examples 16 to 19 or some other example herein, wherein the first and second tabs comprise aluminum or nickel and the third and fourth tabs comprise nickel or copper.

Example 21 includes the battery of any one of examples 16 to 20 or some other example herein, wherein the first and second tabs are offset with each other in the second direction by between about 15 um and about 55 um.

Example 22 includes the battery of any one of examples 16 to 21 or some other example herein, wherein the third and fourth tabs are offset with each other in the second direction by between about 15 um and about 55 um.

Example 23 includes a computing device, comprising: a system-on-chip (SoC); and a component coupled to the SoC, the component including a battery, comprising: an anode layer; a cathode layer; a separator layer between the anode layer and the cathode layer; a first tab coupled to the cathode layer and a second tab coupled to the cathode layer, wherein the first tab and the second tab extend from the cathode layer in a first direction in a first plane and do not overlap with each other in a second direction or third direction, wherein the second direction and third direction are perpendicular to each other in a first plane and the first direction is perpendicular to the second and third direction in a second plane; and a third tab coupled to the anode layer and a fourth tab coupled to the anode layer, wherein the third tab and the fourth tab extend from the anode layer in the first direction and do not overlap with each other, or with the first or second tabs, in the second direction or third direction.

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included. If the specification or claim refers to "a" or "an" element, that does not mean there is only one of the elements. If the specification or claims refer to "an additional" element, that does not preclude there being more than one of the additional elements.

Furthermore, the particular features, structures, functions, or characteristics may be combined in any suitable manner in one or more embodiments. For example, a first embodiment may be combined with a second embodiment anywhere the particular features, structures, functions, or characteristics associated with the two embodiments are not mutually exclusive.

While the disclosure has been described in conjunction with specific embodiments thereof, many alternatives, modifications and variations of such embodiments will be apparent to those of ordinary skill in the art in light of the foregoing description. The embodiments of the disclosure are intended to embrace all such alternatives, modifications, and variations as to fall within the broad scope of the appended claims.

## Claims

1. A battery, comprising:
an anode layer;
a cathode layer;
a separator layer between the anode layer and the cathode layer;
a first tab coupled to the cathode layer and a second tab coupled to the cathode layer, wherein the first tab and the second tab extend from the cathode layer in a first direction in a first plane and do not overlap with each other in a second direction or third direction, wherein the second direction and third direction are perpendicular to each other in a first plane and the first direction is perpendicular to the second and third direction in a second plane; and
a third tab coupled to the anode layer and a fourth tab coupled to the anode layer, wherein the third tab and the fourth tab extend from the anode layer in the first direction and do not overlap with each other, or with the first or second tabs, in the second direction or third direction.

2. The battery of claim 1, wherein the battery comprises a lithium-ion pouch cell.

3. The battery of claim 1 or claim 2, wherein the anode layer comprises a copper foil coated with an active material comprising graphite, and wherein the copper foil has a thickness of about 12 um and the active material has a thickness of about 39 um.

4. The battery of any one of claims 1 to 3, wherein the cathode layer comprises an aluminum foil coated with an active material comprising lithium cobalt oxide, and wherein the aluminum foil has a thickness of about 20 um and the active material has a thickness of about 60 um.

5. The battery of any one of claims 1 to 4, wherein the first and second tabs comprise aluminum or nickel and the third and fourth tabs comprise nickel or copper.

6. The battery of any one of claims 1 to 5, wherein the first and second tabs are offset with each other in the second direction by between about 15 um and about 55 um, or wherein the third and fourth tabs are offset with each other in the second direction by between about 15 um and about 55 um.

7. The battery of any one of claims 1 to 6, wherein the first tab is coupled to the cathode layer via a first intermediate tab and the second tab is coupled to the cathode layer via a second intermediate tab, and wherein the third tab is coupled to the anode layer via a third intermediate tab and the fourth tab is coupled to the anode layer via a fourth intermediate tab.

8. The battery of any one of claims 1 to 7, wherein the first tab is coupled to the cathode layer via a first plurality of intermediate tabs and the second tab is coupled to the cathode layer via a second plurality of intermediate tabs, and wherein the third tab is coupled to the anode layer via a third plurality of intermediate tabs and the fourth tab is coupled to the anode layer via a fourth plurality of intermediate tabs.

9. A battery, comprising:
an anode layer;
a cathode layer;
a separator layer between the anode layer and the cathode layer;
a first tab coupled to the cathode layer and a second tab coupled to the cathode layer, wherein the first tab and the second tab extend from the cathode layer in a first direction in a first plane and do not overlap with each other in a second direction or third direction, wherein the second direction and third direction are perpendicular to each other in a first plane and the first direction is perpendicular to the second and third direction in a second plane; and
a third tab coupled to the anode layer and a fourth tab coupled to the anode layer, wherein the third tab and the fourth tab extend from the anode layer in a fourth direction opposite to the first direction and do not overlap with each other in the second direction or third direction.

10. The battery of claim 9, wherein the battery comprises a lithium-ion pouch cell.

11. The battery of claim 9 or claim 10, wherein the anode layer comprises a copper foil coated with an active material comprising graphite, and wherein the copper foil has a thickness of about 12 um and the active material has a thickness of about 39 um.

12. The battery of any one of claims 9 to 11, wherein the cathode layer comprises an aluminum foil coated with an active material comprising lithium cobalt oxide, wherein the aluminum foil has a thickness of about 20 um and the active material has a thickness of about 60 um.

13. The battery of any one of claims 9 to 12, wherein the first and second tabs comprise aluminum or nickel and the third and fourth tabs comprise nickel or copper.

14. The battery of any one of claims 9 to 13, wherein the first and second tabs are offset with each other in the second direction by between about 15 um and about 55 um, or wherein the third and fourth tabs are offset with each other in the second direction by between about 15 um and about 55 um.

15. A computing device, comprising:
a system-on-chip (SoC); and
a component coupled to the SoC, the component including a battery, comprising:
an anode layer;
a cathode layer;
a separator layer between the anode layer and the cathode layer;
a first tab coupled to the cathode layer and a second tab coupled to the cathode layer, wherein the first tab and the second tab extend from the cathode layer in a first direction in a first plane and do not overlap with each other in a second direction or third direction, wherein the second direction and third direction are perpendicular to each other in a first plane and the first direction is perpendicular to the second and third direction in a second plane; and
a third tab coupled to the anode layer and a fourth tab coupled to the anode layer, wherein the third tab and the fourth tab extend from the anode layer in the first direction and do not overlap with each other, or with the first or second tabs, in the second direction or third direction.
